# EUROPÄISCHE PATENTANMELDUNG

(11) **EP 0 635 331 A1**
(43) Veröffentlichungstag der Anmeldung: **25.01.1995**
(21) Anmeldenummer: 94105682.2
(22) Anmeldetag: 13.04.1994
(51) Int. Cl.: B23K 26/00, B23K 26/14

(54) **Laserschneidvorrichtung**

(30) Priorität: 21.07.1993 DE 4324363
(71) Anmelder: C. BEHRENS AG, D-31061 Alfeld (DE)
(72) Erfinder: Modler, Werner, D-31073 Grünenplan (DE)
(74) Vertreter: Sobisch, Peter, Dipl.-Ing.

(57) **Zusammenfassung**

Um eine Laserschneidvorrichtung in einfacher Weise mit Hinblick auf ein verbessertes Arbeitsergebnis beispielsweise bezüglich der erreichbaren Kantenqualität, der Gratminimierung sowie der Einsparung von Nacharbeiten hin auszugestalten, wird vorgeschlagen, einem herkömmlichen Schneidkopf (1), der mit einer Düsenkammer (3) zur Führung eines Gases ausgerüstet ist, eine Gasmischeinrichtung (5) vorzuordnen, deren Ausgangsleitung (6) mit dem Schneidkopf (1) in Verbindung steht. Die Gasmischeinrichtung (5) ist mit einer, das Hauptgas, zum Beispiel N₂ führenden Eingangsleitung (7) und weiteren Eingangsleitungen (8,9,10) versehen, welch letztere der Führung von Zusatzgasen dienen, die entweder einzeln oder in Kombination dem, über die Eingangsleitung (7) strömenden Hauptgasstrom in definierter Weise zumischbar sind, so daß in jedem Fall über die Ausgangsleitung (6) ein Gasgemisch definierter Zusammensetzung in Richtung auf den Schneidkopf (1) hinströmt. Zum Einmischen der Zusatzgase ist jeder Eingangsleitung (8,9,10) jeweils eine Injektordüse (14,14',14'') zugeordnet, deren Durchströmungsquerschnitt einstellbar ist und die ausgangsseitig mit einem Leitungselement in Verbindung steht, welches den Hauptgasstrom führt.

## Beschreibung

Die Erfindung bezieht sich auf eine Laserschneidvorrichtung entsprechend dem Oberbegriff des Anspruchs 1.

Laserschneidverfahren sind bei Metallen seit vielen Jahren praktisch erprobt und insbesondere mechanischen Schneidverfahren mit Hinblick auf die erzielbare Präzision der Schnitte, die Verschleißfreiheit des Schneidwerkzeugs sowie die geringe Geräuschentwicklung während des Schneidens deutlich überlegen. Auch hat die bisherige Entwicklung der Lasertechnik zu einer erheblichen Steigerung der auf diese Weise schneidfähigen Werkstückdicken geführt.

Eine bestimmte Laserschneidvorrichtung ist aus der DE 36 37 568 A1 bekannt. Diese besteht aus einer Laserstrahlungsquelle, deren Strahlung durch einen Schneidkopf hindurchgeführt und etwa in der Ebene des zu bearbeitenden Werkstücks fokussiert ist. Der Schneidkopf weist eine Düsenkammer auf, die sich in Richtung auf das Werkstück hin verjüngt und eine zentrische Austrittsöffnung aufweist, über welche der gebündelte Laserstrahl austritt. Diese Düsenkemmer ist mit einer ersten Eingangsleitung für ein gasförmiges Fluid versehen, welches während des Schneidvorgangs über die genannte zentrische Öffnung austritt. Der konische Teil der Düsenkammer ist seinerseits unter Belassung eines Spaltes von einem konischen Bauteil umgeben, so daß sich dementsprechend ein konisch verlaufender ringspaltartiger Raum ergibt, der mit einer zweiten Eingangsleitung für ein gasförmiges Fluid versehen ist und der austrittsseitig in einer Ringdüse endet, durch welche ebenfalls ein gasförmiges Fluid strömt. Es können unterschiedliche, jedoch auch gleiche Fluide in den beiden Eingangsleitungen vorgesehen sein. Ferner kann durch axiales Verschieben des äußeren konischen Bauteils die über den Ringspalt strömende Fluidmenge variiert werden.

Die Verwendung von Gasen dient beim Laserschneiden zum einen der Kühlung des Werkstücks insbesondere in der Umgebung der jeweiligen Brennstelle - sie dient darüber hinaus dem Ausblasen von Reaktionsprodukten des Verbrennungsvorgangs wie z.B. schlackenartigen Bestandteilen usw. Bei der DE 36 37 568 A1 wird somit ein vergleichsweise komplex ausgebildeter Schneidkopf eingesetzt, der mit Zuführmöglichkeiten für zwei Unterschiedliche Gase versehen ist, wobei diese Gase jedoch erst nach Austreten aus dem Schneidkopf, somit unmittelbar im Bereich der zu bearbeitenden Werkstückzone einer Durchmischung unterliegen.

Eine wesentliche Voraussetzung für einen qualitativ hochwertigen Laserschnitt besteht darin, daß die auftreffende Laserstrahlung in das Werkstück vollständig eingekoppelt wird, so daß die insoweit absorbierte Energie möglichst vollständig in Wärme umgesetzt wird. Darüber hinaus müssen anfallende Reaktionsprodukte entfernt werden, wobei ferner möglichst glatte Schnittflächen entstehen sollen. Die Erfüllung sämtlicher dieser Ziele bereitet jedoch bei Buntmetallen, so z.B. Aluminium, Kupfer und Messing Probleme. Insbesondere bei diesen Metallen lassen sich die erzielte Rauhtiefe und die Gratbildung im Bereich der Schnittkanten insbesondere bei Werkstückdicken von mehr als 4 mm mit den bisherigen Verfahren und Vorrichtungen nicht hinreichend zuverlässig beherrschen, so daß häufig kostenaufwendige Nachbearbeitungen erforderlich werden.

Als Hauptgase wird bei Laserschneidvorrichtungen überwiegend O₂ eingesetzt, bei Bearbeitung von Buntmetallen werden Inertgase, Im Regelfall N₂ eingesetzt, wobei zur Beschleunigung von als Folge des Brennprozesses auftretenden chemischen Reaktionen Sauerstoff zugemischt werden kann, wodurch auch das Ausblasen der Reaktionsprodukte aus dem Schnittbereich erleichtert wird.

Es ist die Aufgabe der Erfindung, eine Laserschneidvorrichtung der eingangs bezeichneten Gattung zu entwerfen, welche insbesondere zur Behandlung von Buntmetallen geeignet ist, und die insbesondere einfach einsetzbar ist.

Gelöst ist diese Aufgabe bei einer gattungsgemäßen Laserschneidvorrichtung durch die Merkmale des Kennzeichnungsteils des Anspruchs 1.

Erfindungswesentlich ist zunächst einmal, daß ein herkömmlicher Schneidkopf eingesetzt werden kann, der werkstückseitig eine zentrale, den gebündelten Laserstrahl führende Austrittsöffnung aufweist, über welche gleichzeitig ein Gasgemisch strömen kann. Indem einem solchen herkömmlichen Schneidkopf eine erfindungsgemäße Gasmischeinrichtung zugeordnet wird, besteht die Möglichkeit, vorhandene Laserschneidvorrichtungen in einfacher Weise im erfindungsgemäßen Sinne umzurüsten, insbesondere um deren Tauglichkeit zum Schneiden von Buntmetellen zu verbessern. Eine wesentliche Voraussetzung zum qualitativ hochwertigen Schneiden von Buntmetellen wird erfindungsgemäß darin gesehen, daß im Bereich der Brennstelle eine dem Werkstoff und/oder der Werkstückdicke sowie Werkstückgeometrie entsprechende Gasatmosphäre zur Verfügung gestellt wird, nämlich ein speziell an diese Rahmenbedingungen angepaßtes Gasgemisch, welches optimale Arbeitsergebnisse erwarten läßt. Letzteres bedeutet, daß eine Gratbildung praktisch unterbleibt, daß glatte Schnittflächen entstehen und daß gleichzeitig die Schneidleistung, insbesondere die Schneidgeschwindigkeit erhöht und damit auch die Wirtschaftlichkeit des Laserschneidens verbessert werden kann. Letztere wird insbesondere auch dadurch verbessert, daß aufgrund des hochwertigen Schneidergebnisses kostenträchtige Nacharbeiten, z.B. zur Gratbeseitigung, zur Verminderung der Rauhtiefe usw. eingespart werden können. Dies ist unter Verwendung einer Gasmischeinrichtung möglich, die wenigstens zwei Eingangsleitungen und eine Ausgangsleitung aufweist, über welche diese mit dem Schneidkopf in Verbindung steht, so daß in der Ausgangsleitung ein an den jeweiligen Anwendungsfall spezifisch angepaßtes Gasgemisch bereitgestellt wird. Eine wesentliche Voraussetzung besteht ferner darin, daß die Zusammensetzung des in der Ausgangsleitung strömenden Gasgemisches steuerbar ist. Dies kann grundsätzlich in beliebiger Weise erreicht werden. Im Rahmen des Gasgemisches können zwei, jedoch auch weitere Gaskomponenten in praktisch beliebigen Mengenanteilen enthalten sein. Es handelt sich bei diesen Gasen einerseits um inerte Gase wie z .B. N₂, He, jedoch auch um solche Gase, die chemische Reaktionen auslösen oder zumindest begünstigen wie z.B. O₂, CO₂.

Die Merkmale des Anspruchs 2 sind auf ein vorteilhaftes Ausführungsbeispiel der Gasmischeinrichtung gerichtet. Eine Eingangsleitung dient hiernach zur Führung des Hauptgases, welches in dem eingestellten Gasgemisch den größten Mengenanteil aufweist, während die übrigen Eingangsleitungen der Führung von Zusatzgasen dienen. Sämtliche Eingangsleitungen sind mit Regelventilen zur Druckregelung ausgerüstet, wobei der eingestellte Druck zweckmäßigerweise über gleichzeitig angebrachte Druckgeber, Druckmeßgeräte oder dergleichen kontrollierbar sein kann. Die Einmischung der Zusatzgase in den Strom des Hauptgases erfolgt jeweils über besondere Injektordüsen, wobei über die Regelventile die Druckverhältnisse in den Injektordüsen derart eingestellt werden, daß eine Sogwirkung von dem Hauptgasstrom ausgeübt werden kann. Entsprechend dem jeweiligen Anwendungsfall kann dem Hauptgasstrom ein Zusatzgas zugemischt werden, es können jedoch auch zwei, drei oder mehr Zusatzgase unterschiedlicher Art dem Strom des Hauptgases beigemischt werden. Insoweit zeichnet sich die erfindungsgemäße Laserschneidvorrichtung durch ein hohes Maß an praktischer Flexibilität aus.

Zur Anpassung an unterschiedliche Gasmengenströme können die Injektordüsen mit auswechselbaren Einsatzkörpern ausgerüstet sein, die jeweils unterschiedliche Durchströmungsquerschnitte aufweisen. Es ist dies eine konstruktiv vergleichsweise einfach realisierbare Möglich-keit der Einstellung unterschiedlicher Gasmengenströme.

Die Merkmale des Anspruchs 4 sind insbesondere von Vorteil insoweit, als Wartungsarbeiten an den Injektordüsen erheblich vereinfacht werden.

Die Merkmale der Ansprüche 5 und 6 sind auf unterschiedliche Varianten zur Nutzung der mehreren Eingangsleitungen der Gasmischeinrichtung gerichtet. So können die Eingangsleitungen beispielsweise mit Gasreservoirs unterschiedlichen Inhalts in Verbindung stehen - dies eröffnet recht vielfältige Möglichkeiten der Gemischzusammenstellung. Es können wenigstens ein Teil der Eingangsleitungen jedoch auch mit Gasreservoirs gleichen Inhalts in Verbindung stehen - dies eröffnet durch Zuschalten oder Abschalten einzelner Eingangsleitungen einfache Möglichkeiten zur quantitativen Änderung der Gemischzusammensetzung zwischen beispielsweise einem Zusatzgas und dem Hauptgas.

Die Merkmale des Anspruchs 7 sind bei einem automatisierten Betrieb der Laserschneideinrichtung von Vorteil und eröffnen in Verbindung mit beispielsweise CNC steuerbaren Antrieben eine rechnergestützte Einstellung der Gaszusammensetzung für den Schneidvorgang.

Die Erfindung wird im folgenden unter Bezugnahme auf das in der Zeichnungsfigur schematisch dargestellte Ausführungsbeispiel näher erläutert werden.

Die Zeichnungsfigur zeigt die erfindungsgemäße Gasmischeinheit, die in Verbindung mit einer Laserschneideinrichtung eingesetzt ist, von welcher jedoch lediglich ein, eine Fokussiereinheit beinhaltender Schneidkopf 1 sowie die Achse 2 des Laserstrahls angedeutet sind. In den Schneidkopf 1 baulich integriert ist eine Düsenkammer 3, welche in eine Schneiddüse einmündet und der Bereitstellung einer bestimmten Gasatmosphäre im Auftreffpunkt des Laserstrahls auf einem Werkstücks 4 dient. Der Schneidkopf 1 nebst diesen Komponenten ist ein herkömmliches Bauteil und wird im folgenden nicht näher beschrieben werden.

Mit 5 ist eine Gasmischeinrichtung bezeichnet, die über eine Austrittsleitung 6 mit dem Schneidkopf 1 in Verbindung steht und die ihrerseits mit Eingangsleitungen 7, 8, 9, 10 versehen ist. Die Ausgangsleitung 6 dient der Überführung eines einsatzfähigen Gasgemisches zu dem Schneidkopf 1, wohingegen die Eingangsleitungen 7 bis 10 mit zeichnerisch nicht dargestellten, wenigstens teilweise unterschiedliche Gase beinhaltenden Gasreservoirs in Verbindung stehen.

Diese Gasmischeinrichtung (5) einschließlich des Schneidkopfes 1 kann in an sich bekannter Weise am Maschinengestell einer Schneidpresse angebracht sein, aber auch an reinen Laserschneidanlagen, wobei das Werkstück 4 unter Verwendung eines zeichnerisch ebenfalls nicht dargestellten Koordinatentisches relativ zu der Achse 2 des Laserstrahls in an sich bekannter Weise positionierbar ist. Auch hierauf wird im folgenden nicht näher eingegangen werden.

Jeder Eingangsleitung 7 bis 10 sind ein Regelventil 7', 8', 9', 10' sowie ein Druckmeßgerät 7'', 8'', 9'' und 10'' zugeordnet.

Die Ausgangsleitung 6 endet innerhalb der Mischeinrichtung 5 an einem Verzweigungspunkt 11, an dem eine Sammelleitung 12 angeschlossen ist, die ihrerseits mit funktionell zueinander parallel geschalteten Leitungselementen 13, 13', 13'', 13''' in Verbindung steht, die innerhalb der Mischeinrichtung 5 die Fortführung der Eingangsleitungen 7 bis 10 bilden.

Während die Eingangsleitung 7 unmittelbar über das Leitungselement 13 mit der Sammelleitung 12 in Verbindung steht, sind zwischen den Eingangsleitungen 8 bis 10 und den Leitungselementen 13' bis 13''' innerhalb der Mischeinrichtung 5 jeweils Injektordüsen 14, 14' und 14'' angeordnet. Jede dieser Injektordüsen 14, 14', 14'' ist mit austauschbaren, den Durchströmungsquerschnitt bestimmenden, zeichnerisch nicht näher dargestellten Einsatzkörpern ausgerüstet. Schließlich sind mit 15, 15' und 15'' jeweils Absperrventile bezeichnet, die im Zuge der Eingangsleitungen 8, 9, 10 zwischen den Anschlußpunkten der Druckmeßgeräte 8'', 9'' und 10'' und der Mischeinrichtung 5 angeordnet sind.

Die räumliche Ausgestaltung des innerhalb der Gasmischeinrichtung 5 verlaufenden Rohrleitungsnetzes kann naturgemäß von der zeichnerisch dargestellten Ausführungsform abweichen, solange sichergestellt ist, daß einem, durch die Eingangsleitung 7, das Leitungselement 13, die Sammelleitung 12 und die Ausgangsleitung 6 bestimmten, das zur Durchführung des Schneidverfahrens erforderliche Hauptgas führenden Leitung über Injektordüsen nach Maßgabe eines steuerbaren Mengenanteils wenigstens ein Zusatzgas zugemischt werden kann, so daß über die Ausgangsleitung 6, welche eine Mischstrecke bildet, dem Schneidkopf 1 ein Gasgemisch definierter Zusammensetzung zugeführt wird. Auch können die Gasmischeinrichtung 5, die Regelventile 7', 8', 9', 10', die Druckmeßgeräte 7'', 8'', 9'', 10'' und die Absperrventile 15, 15' und 15'' wenigstens teilweise baulich zusammengefaßt sein. Der Gebrauch der erfindungsgemäßen Gasmischeinrichtung in Verbindung mit dem Vorgang des Laserschneidens gestaltet sich wie folgt;
Über die Eingangsleitung 7 wird das Hauptgas geführt, im Regelfall ein Inertgas wie zum Beispiel N₂, dessen Druck über das Regelventil 7' auf einen vorherbestimmten Wert eingestellt wird, so daß dieses Gas durch das Leitungselement 13, die Sammelleitung 12 und die Ausgangsleitung 6 unter einem definierten Druck strömt. In Abhängigkeit von dem Werkstoff des Werkstoffs 4 wird diesem Gas wenigstens ein weiteres Gas zugemischt, beispielsweise das, in der Eingangsleitung 8 anstehende Zusatzgas. In diesem Fall werden die Absperrventile 15', 15'' geschlossen, so daß die, in den Eingangsleitungen 9, 10 anstehenden Zusatzgase funktionslos sind. Es wird nunmehr das in der Leitung 8 strömende Zusatzgas über das Regelventil 8' auf einen solchen Druck eingestellt, der in Verbindung mit dem Druck des Hauptgases und der Bemessung des Durchströmungsquerschnitts des Einsatzkörpers der Injektordüse 14 aufgrund des Injektorprinzips dieses, über die Eingangsleitung 8 strömende Zusatzgas in einem gewünschten Mengenanteil dem Hauptgasstrom beimischt. Dieses Gasgemisch, welches den Laserstrahl umgibt, übt in dessen Auftreffbereich auf dem Werkstück 4 entsprechend der Gaszusammensetzung unterschiedliche Wirkungen aus. So wird der Umgebungsbereich des Werkstücks durch die Gasströmung gekühlt und gleichzeitig Reaktionsprodukte des Schneidprozesses, beispielsweise Oxydationsprodukte aus dem Einwirkungsbereich des Laserstrahls herausgeblasen. Die Beschaffenheit dieser Reaktionsprodukte, insbesondere deren Neigung zur Gratbildung bzw. zu Anbackungen und die Glätte der erzielbaren Schnittflächen sind über die Wahl des Zusatzgases bzw. der Zusatzgase steuerbar. Soweit es um die Erzielung gratfreier, durch glatte Schnittflächen gekennzeichnete Schneidvorgänge geht, ist die hierfür optimale Gaszusammensetzung sowohl werkstoff- als auch werkstückdickenabhängig zu sehen. So wird der Reaktionsprozeß, d.h. die chemische Umsetzung von Verbrennungsrückständen sowie deren Überführung in eine leicht ausblasbare Form durch Gase wie O₂ gefördert, wohingegen beispielsweise He als Zusatzgas die Bildung glatter Schnittflächen begünstigt.

Anstelle eines Zusatzgases können - werkstückdicken- und werkstoffabhängig auch zwei oder mehr Zusatzgase in der für den Schneidprozeß optimalen Menge beigemischt werden, wobei für den Mischprozeß der Gase wiederum von dem oben kurz dargelegten Injektorprinzip Gebrauch gemacht werden kann. Wesentlich ist in jedem Fall, daß in der Ausgangsleitung 6 ein nach Maßgabe des Schneidprozesses konditioniertes Gasgemisch zur Verfügung steht, welches die Erzielung gratfreier sowie glatte Schnittflächen aufweisender Bearbeitungsvorgänge an dem Werkstück 4 ermöglicht.

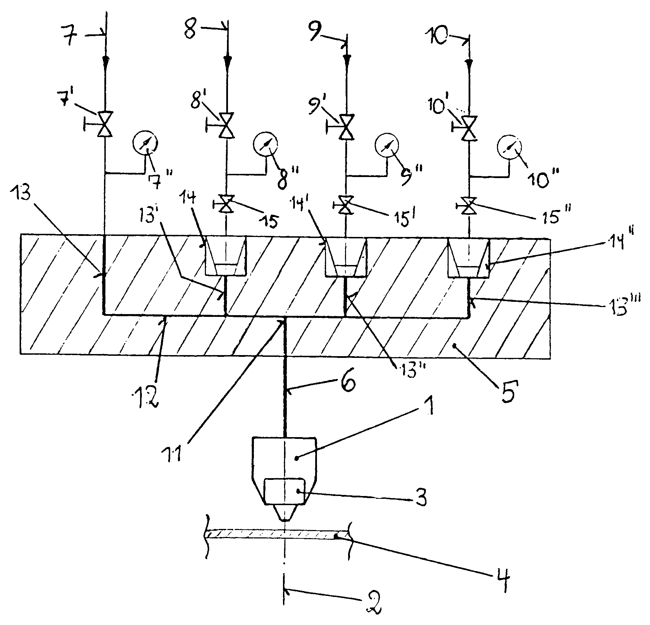

## Patentansprüche

1. Laserschneidvorrichtung mit einer Laserstrahlungsquelle und einem, zur Führung eines Laserstrahls in Richtung auf die momentane Brennstelle auf einem Werkstück (4) hin bestimmten, eine Düsenkammer (3) zur weiteren Führung eines Gases in Richtung auf die Brennstelle hin aufweisenden Schneidkopf (1),
gekennzeichnet durch
- eine Gasmischeinrichtung (5), die mit wenigstens zwei Eingangsleitungen (4,8,9,10) und mit einer Ausgangsleitung (6) versehen ist,
- wobei der Schneidkopf (1) über die Ausgangsleitung (6) mit der Gasmischeinrichtung (5) in Verbindung steht und
- wobei die mengenmäßige Zusammensetzung des in der Ausgangsleitung (6) strömenden Gasgemisches steuerbar ist.

2. Laserschneidvorrichtung nach Anspruch 1, dadurch gekennzeichnet,
- daß eine Eingangsleitung (7) zur Führung des Hauptgases eingerichtet ist und zumindest mit einem Regelventil (7') ausgerüstet ist und
- daß die übrigen Eingangsleitungen (8,9,10) zur Führung von Zusatzgasan eingerichtet sind, zumindest mit Regelventilen (8',9',10') ausgerüstet sind und über Injektordüsen (14,14',14'') an ein, das Hauptges führendes und mit der Ausgangsleitung (6) in Verbindung stehendes Leitungselement angeschlossen sind.

3. Laserschneidvorrichtung nach Anspruch 2, dadurch gekennzeichnet,
- daß die Injektordüsen (14,14',14'') mit auswechselbaren Einsatzkörpern ausgerüstet sind.

4. Laserschneidvorrichtung nach Anspruch 2 oder 3, dadurch gekennzeichnet,
- daß die, der Führung von Zusatzgasen dienenden Eingangsleitungen (8,9,10) zusätzlich mit Absperrventilen (15,15',15'') ausgerüstet sind.

5. Laserschneidvorrichtung nach einem der vorangegangenen Ansprüche 2 bis 4, dadurch gekennzeichnet,
- daß die der Führung von Zusatzgasen dienenden Eingangsleitungen (8,9,10) mit Gasreservoirs unterschiedlichen Inhalts in Verbindung stehen.

6. Laserschneidvorrichtung nach einem der vorangegangenen Ansprüche 2 bis 4, dadurch gekennzeichnet, daß die der Führung von Zusatzgasen dienenden Eingangsleitungen (8,9,10) zumindest teilweise mit Gasreservoirs gleichen Inhalts in Verbindung stehen.

7. Laserschneidvorrichtung nach einem der vorangegangenen Ansprüche 2 oder 4 bis 6, dadurch gekennzeichnet, daß die Durchströmungsquerschnitte der Injektordüsen (14,14',14'') motorisch verstellbar ausgebildet sind.
